# EUROPEAN PATENT APPLICATION

(11) **EP 1 793 030 A2**
(43) Date of publication of application: **06.06.2007**
(21) Application number: 06425807.2
(22) Date of filing: 27.11.2006
(51) Int. Cl.: D06F 58/26

(54) **Solar-powered laundry drying device**

(30) Priority: 30.11.2005 IT MI20052300
(71) Applicant: Giardina, Carmelo, 97016 Pozzallo RG (IT)
(72) Inventor: Giardina, Carmelo, 97016 Pozzallo RG (IT)
(74) Representative: Concone, Emanuele

(57) **Abstract**

A laundry drying device includes a solar collector (C) for air, connected to a laundry cabinet (S) inside which a plurality of clothes lines (B) are arranged, the air entering said collector (C) through a filter (F) and being forced to circulate through the device by a fan (V) so that when leaving the collector (C) it enters the top portion of said laundry cabinet (S) inside which it is delivered through a plurality of apertures formed in a delivery pipe (E) and is finally discharged from the bottom portion through a suitable outlet (U).

## Description

The present invention relates to a device for drying laundry, and in particular to a solar-powered device.

It is known that the easiest way to dry laundry using solar power is to hang out the clothes to be dried on lines under the sun. However this implies the availability of a sun-exposed space of sufficient size, and that is often difficult to have in modem condominial houses where only a small balcony is usually available.

This conventional method also has some well-known drawbacks, such as weather conditions changing abruptly that jeopardize the drying achieved until that moment (typically through a rain shower that wets and possibly soils the laundry), or colors that are damaged due to the direct irradiation or even dirt that is deposited on the laundry hung out close to a busy street.

Therefore the object of the present invention is to provide a laundry drying device which overcomes the above-mentioned drawbacks.

This object is achieved by means of a device consisting of a solar collector that sends hot air into a laundry cabinet closed by suitable doors.

A first important advantage of the present device is the protection of the laundry provided by the closed cabinet that prevents the risks of rain or dirt deposit, whereby the clothes can stay hung out without risks even after they have dried, waiting to be picked up when needed.

A second significant advantage of this device stems from the fact that only the solar collector has to stay under the sun, whereas the laundry cabinet may be placed even inside or in non-exposed areas, whereby the required sun-exposed space is much smaller than the space needed to hang out the clothes.

A further sensible advantage of said device results from drying by means of the hot air introduced in the cabinet without exposing the clothes directly to the sun rays, so as to preserve the integrity of the colors.

Yet another significant advantage of the present device is the ironing effect achieved by the hot air circulated in the cabinet from the top toward the bottom, so that the clothes are already partially ironed which results in saving time, labour and power to complete the ironing where required.

Last, but not least, there is the substantial advantage that such a device, in its preferred embodiment, has no operational cost since it exploits only the solar power for its operation.

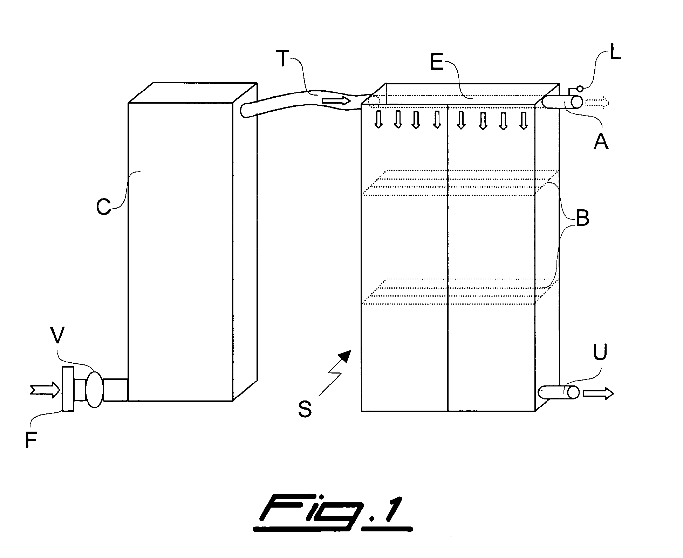

These and other advantages and characteristics of the device according to the present invention will be clear to those skilled in the art from the following detailed description of an embodiment thereof with reference to the only drawing, annexed as fig.1, that diagrammatically shows its structure.

Referring to said figure there is seen that the present device is essentially made up of a solar collector C connected, through a flexible tube T, to a laundry cabinet S inside which a plurality of clothes lines B are arranged that are accessed through a pair of front doors.

The solar collector C consists of a metal pipe, bent over in a coil and painted matt black, housed in a transparent case according to what is better described in the Italian patent IT 1332522, in the name of the same applicant, to which reference is made for further details.

The air enters collector C through a filter F and is forced to circulate through the device by a fan V that is preferably fed by a solar panel (not shown) also arranged on the collector case, but it could be simply connected to the electric mains.

After being heated by passing through collector C, the air is sent through tube T, preferably provided with a suitable thermal insulation, into the top portion of the laundry cabinet S. Here, the air is introduced inside cabinet S through a plurality of apertures formed in a delivery pipe E, preferably provided with means for adjusting the air flow rate, and is then discharged through a suitable outlet U.

In the instance where cabinet S is placed inside the house, in order to prevent the introduction in the domestic environment of the moist air discharged through outlet U the latter may be connected to a further flexible tube that conveys the moist air to the outside.

In order to be able to use the device according to the present invention also for other purposes, such as house heater or hairdryer, the delivery pipe E preferably continues outside cabinet S with an auxiliary outlet A, whose opening is controlled by a manually-operated valve through a suitable control lever L.

It is clear that the above-described and illustrated embodiment of the laundry drying device according to the invention is just an example susceptible of various modifications. In particular, the shape and size of the solar collector C and of cabinet S may be freely changed according to design requirements, and in the case of a cabinet to be placed only outside the collector could be mounted directly on the cabinet thus dispensing with the connection tube T.

## Claims

1. Laundry drying device **characterized in that** it includes a solar collector (C) for air, connected to a laundry cabinet (S) inside which a plurality of clothes lines (B) are arranged, the air entering said collector (C) through a filter (F) and being forced to circulate through said device by a fan (V) so that when leaving the collector (C) it enters the top portion of said laundry cabinet (S) through a plurality of apertures formed in a delivery pipe (E) and is finally discharged from the bottom portion through a suitable outlet (U).

2. Laundry drying device according to claim 1, **characterized in that** the collector (C) is connected to the laundry cabinet (S) through a flexible tube (T).

3. Laundry drying device according to claim 2, **characterized in that** the flexible tube (T) is provided with a thermal insulation.

4. Laundry drying device according to one of the preceding claims, **characterized in that** the delivery pipe (E) is provided with means for adjusting the air flow rate.

5. Laundry drying device according to one of the preceding claims, **characterized in that** the fan (V) is fed by a solar panel arranged on the case of the collector (C).

6. Laundry drying device according to one of the preceding claims, **characterized in that** it further includes a flexible tube connected to the outlet (U).

7. Laundry drying device according to one of the preceding claims, **characterized in that** the delivery pipe (E) continues outside the laundry cabinet (S) with an auxiliary outlet (A), whose opening is controlled by a manually-operated valve through a suitable control lever (L).

8. Laundry drying device according to one of the preceding claims, **characterized in that** the collector (C) is directly mounted on the laundry cabinet (S).
